# EUROPEAN PATENT SPECIFICATION

(11) **EP 3 101 273 B1**
(45) Date of publication and mention of the grant of the patent: **28.07.2021**
(21) Application number: 16172476.0
(22) Date of filing: 01.06.2016
(51) Int. Cl.: F03D 7/02

(54) **SYSTEM AND METHOD FOR REDUCING TORSIONAL MOVEMENT IN A WIND TURBINE TOWER**
SYSTEM UND VERFAHREN ZUR REDUZIERUNG DER DREHBEWEGUNG IN EINEM WINDTURBINENTURM
SYSTÈME ET PROCÉDÉ POUR RÉDUIRE UN MOUVEMENT DE TORSION DANS UNE TOUR DE TURBINE ÉOLIENNE

(30) Priority: 03.06.2015 US 201514729328
(43) Date of publication of application: 07.12.2016
(73) Proprietor: General Electric Company, Schenectady, NY 12345 (US)
(72) Inventor: KOERBER, Arne, Greenville, SC 29615 (US); HOFFMANN, Till, 48499 DE Salzbergen (DE)
(74) Representative: Zimmermann & Partner Patentanwälte mbB

(56) References cited:
- EP-A2- 2 159 416
- EP-A2- 2 713 048
- US-A1- 2011 115 233
- US-A1- 2015 132 129
- None

## Description

The present invention relates to generally to wind turbines, and more particularly, to a system and method for reducing torsional movement of a wind turbine tower.

Wind power is considered one of the cleanest, most environmentally friendly energy sources presently available, and wind turbines have gained increased attention in this regard. A modern wind turbine typically includes a tower, a generator, a gearbox, a nacelle, and a rotor having a rotatable hub with one or more rotor blades. The rotor blades capture kinetic energy of wind using known airfoil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

Like most dynamic systems, wind turbines are subject to undesirable vibrations that may detrimentally impact the operation and/or structural integrity of the wind turbine. Such vibrations often present themselves as bending and/or torsional vibrations within the wind turbine tower. Moreover, these bending and torsional vibrations may have resonance values (e.g., large amplitude oscillations at a specific frequency) within the operating range of the wind turbine. Accordingly, to minimize damage to the wind turbine, wind turbine component design should account for these undesirable vibrations.

In addition, wind turbines with lattice or space frame towers can have low torsional frequencies and low torsional damping, thereby leading to excessive torsional movement, trips, and/or tower damage. More specifically, lattice towers typically have a low natural frequency in the torsional axis as compared to tubular towers. Thus, such towers can be easily excited by turbulent wind because of their lower natural frequency.

One design approach for minimizing torsional vibrations in the wind turbine tower is to structurally reinforce the wind turbine so as to alter its vibration response (e.g., make the tower stiffer). Such a solution, however, may be prohibitively expensive, especially as tower heights continue to increase. Another design approach involves allowing the vibrations and addressing their impact through supplemental systems.

See, for example, US 2015/0132129 and EP 2 713 048. In this regard, various vibration dampers have been implemented that reduce or minimize the effects of resonant vibrations in wind turbines. Such dampers may, for example, reduce the large-amplitude oscillations characteristic of resonant behavior. In one form or another, however, these vibration dampers can have certain drawbacks that do not fully address the potential negative impact of resonant vibrations of the wind turbine.

In view of the aforementioned, there is a need for an improved active tower torsion damper for wind turbine towers. More specifically, an active tower torsion damper for lattice towers would be advantageous.

Various aspects and advantages of the invention will be set forth in part in the following description, or may be clear from the description, or may be learned through practice of the invention.

The present invention is defined by the appended claims.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawings:
FIG. 1 illustrates a perspective view of a wind turbine having a lattice tower structure according to the present disclosure;
FIG. 2 illustrates a perspective view of an alternative embodiment of a wind turbine having a lattice tower structure according to the present disclosure;
FIG. 3 illustrates a detailed, perspective view of one embodiment of a nacelle of a wind turbine according to the present disclosure;
FIG. 4 illustrates a block diagram of one embodiment of suitable components that may be included in a controller of the wind turbine;
FIG. 5 illustrates a block diagram of one embodiment of a system for reducing vibrations of the wind turbine that may be implemented by the wind turbine controller according to the present disclosure;
FIG. 6 illustrates a top view of one embodiment of a wind turbine, particularly illustrating a plurality of sensors configured to measure a torsional movement of a tower of the wind turbine;
FIG. 7 illustrates a schematic diagram of another embodiment of a system for reducing vibrations of the wind turbine that may be implemented by the wind turbine controller according to the present disclosure;
FIG. 8 illustrates various graphs depicting the effects implementing a system for active torsional damping of a wind turbine tower according to the present disclosure; and
FIG. 9 illustrates a flow diagram of one embodiment of a method for reducing vibrations of the wind turbine that may be implemented by the wind turbine controller according to the present disclosure.

Modern wind turbines experience an increase in size, which includes an increasing rotor diameter. Thereby, loads on the components of the wind turbine increase as well. This also relates to the tower of the wind turbine, which includes a significant portion of the mass of the entire wind turbine. As a result, in an attempt to withstand the increasing loads by providing stronger or additional materials, the tower experiences the largest increase in mass. According to embodiments described herein, the loads on the tower can be reduced by providing an active damper for the tower. As a result, the loads can be reduced. Thereby, the material strength of the wind turbine or wind turbine components, e.g., the tower, does not need to be increased or may even be reduced.

Generally, the present disclosure is directed to a system and method for actively controlling a wind turbine so as to reduce torsional movements of a tower of the wind turbine. More specifically, in certain embodiments, the system includes one or more sensors for measuring the torsional movement of the machine head, e.g. via an angular movement sensor or linear movement sensors in the tower center and at the end of the generator frame. For example, in certain embodiments, by subtracting the lateral tower movement from the later generator frame movement, the torsional tower movement can be established when filtering around the expected natural frequency. More specifically, the generator frame natural frequency modes are typically much higher, e.g. five times higher, and can therefore be distinguished from the tower natural frequency modes. In additional embodiments, the measurement of the yawing moment, e.g. Q, at the rotor shaft can also be used additionally or exclusively to determine the torsional movement. Thus, using individual pitch control, a yawing moment can be introduced that offsets and therefore damps the unwanted tower torsional movement. Accordingly, the pitch drive mechanisms are fast enough to effectively damp the tower vibrations in the region of natural frequencies.

The present disclosure provides many advantages not present in the prior art. For example, the active damping system according to the present disclosure can be implemented without additional cost to the wind turbine by using existing sensors, e.g. accelerometers, and pitch drive mechanisms. Further, the system of the present disclosure reduces tower vibrations in torsionally weak towers, such as lattice tower structures. These tower designs in turn enable higher hub heights at a lower cost, thereby allowing turbines to be built at low wind speed sites where the cost for the tower would be otherwise prohibitive.

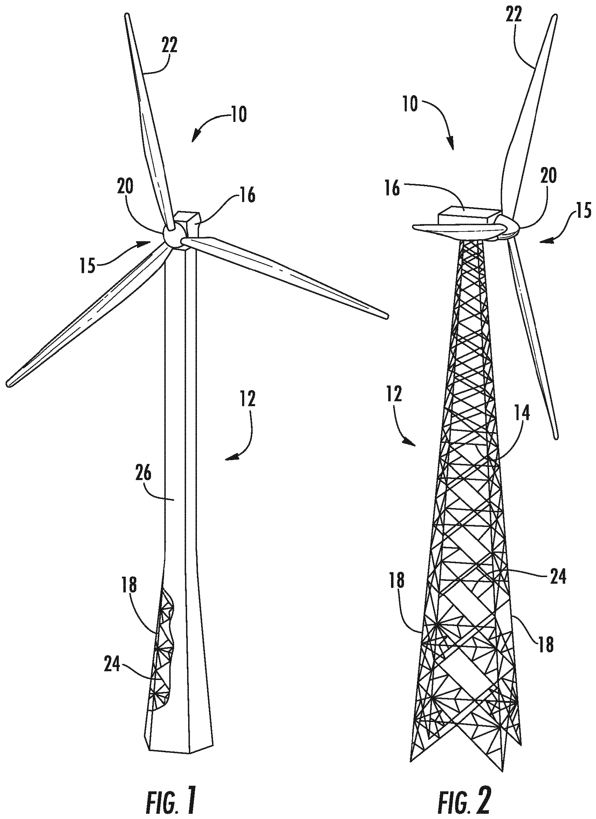

Referring now to the drawings, FIGS. 1 and 2 are perspective views of exemplary wind turbines 10 according to the present disclosure. As shown, the wind turbines 10 include a rotor 15 having a rotatable hub 20 with a plurality of rotor blades 22 mounted to and extending therefrom. Further, the hub 20 is rotationally supported by any manner of power generation components housed within a nacelle 16, as is well known in the art. The nacelle 16 is supported atop a tower structure 12, which in the illustrated embodiments is an open lattice structure formed by legs 18, horizontal braces 14, and diagonal braces 24. The legs 18 are typically angle iron members or pipe members, and the braces 14, 24 are typically angle iron members. These lattice frame tower structures 12 are also referred to in the art as "space frame" towers. The lattice tower structure 12 may be fabricated in sections and erected at the wind turbine site. In the embodiment of FIG. 1, a cladding material 26 may be applied over the lattice structure, which may be any type of suitable fabric, such as an architectural fabric designed for harsh weather conditions. Thus, the cladding 26 is configured to protect workers and equipment within the tower 12. In addition, the cladding 26 provides an aesthetic appearance to the wind turbine 10.

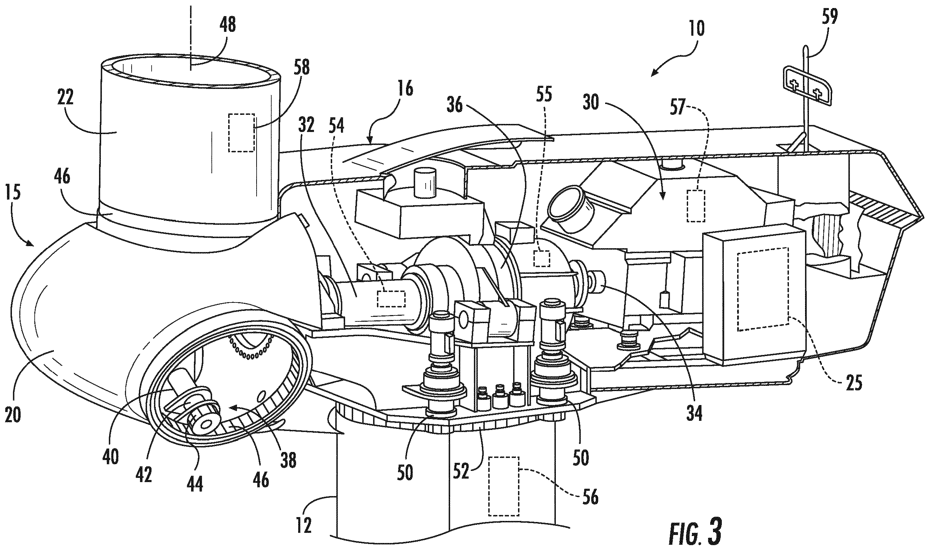

Referring now to FIG. 3, the wind turbine 10 as described herein may also include a controller 25 configured to control the various components of the turbine 10. More specifically, as shown, a simplified, internal view of one embodiment of the nacelle 16 of the wind turbine 10 shown in FIGS. 1 and 2 is depicted, particularly illustrating example components that may be controlled via the controller 25. As shown, a generator 30 may be disposed within the nacelle 16 and may be coupled to the rotor 15 for producing electrical power from the rotational energy generated by the rotor 15. For example, as shown in the illustrated embodiment, the rotor 15 may include a rotor shaft 32 coupled to the hub 20 for rotation therewith. The rotor shaft 32 may, in turn, be rotatably coupled to a generator shaft 34 of the generator 30 through a gearbox 36. As is generally understood, the rotor shaft 32 may provide a low speed, high torque input to the gearbox 36 in response to rotation of the rotor blades 22 and the hub 20. The gearbox 36 may then be configured to convert the low speed, high torque input to a high speed, low torque output to drive the generator shaft 34 and, thus, the generator 30.

Each rotor blade 22 may also include a pitch drive mechanism 38 configured to rotate each rotor blade 22 about its pitch axis 48. Further, each pitch adjustment mechanism 38 may include a pitch drive motor 40 (e.g., any suitable electric motor), a pitch drive gearbox 42, and a pitch drive pinion 44. In such embodiments, the pitch drive motor 40 may be coupled to the pitch drive gearbox 42 so that the pitch drive motor 40 imparts mechanical force to the pitch drive gearbox 42. Similarly, the pitch drive gearbox 42 may be coupled to the pitch drive pinion 44 for rotation therewith. The pitch drive pinion 44 may, in turn, be in rotational engagement with a pitch bearing 46 coupled between the hub 20 and a corresponding rotor blade 22 such that rotation of the pitch drive pinion 44 causes rotation of the pitch bearing 46. Thus, in such embodiments, rotation of the pitch drive motor 40 drives the pitch drive gearbox 42 and the pitch drive pinion 44, thereby rotating the pitch bearing 46 and the rotor blade 22 about the pitch axis 48. Similarly, the wind turbine 10 may include one or more yaw drive mechanisms 50 communicatively coupled to the controller 25, with each yaw drive mechanism(s) 50 being configured to change the angle of the nacelle 16 relative to the wind (e.g., by engaging a yaw bearing 52 of the wind turbine 10).

In addition, the wind turbine 10 may also include one or more sensors (e.g. 54, 55, 56, 57, 58, 59, 102, 104) for measuring various loading and/or operating conditions of the wind turbine 10. The term "operating condition" as used herein may refer to any operating parameter that relates to operation of the wind turbine 10 so as to provide information regarding operational state of the wind turbine 10. For instance, operating conditions may include, but are not limited to, a pitch angle, a generator torque, a generator speed, a power output, or similar. Further, the term "loading condition" as used herein generally refers to any loading condition acting on one of the various wind turbine components. For example, loading conditions may include a torsional movement, a stress, a strain, a twist, a moment, a force, or similar. Further, the loading and/or operating conditions may also include derivatives of any measured loading and/or operating conditions (e.g., blade velocity, acceleration, etc.). In addition, the sensors 54, 55, 56, 57, 58, 59 described herein may include any suitable sensors known in the art. For example, in certain embodiments, the sensors may include one or more of the following: angular accelerometers, linear accelerometers, vibration sensors, angle of attack sensors, camera systems, fiber optic systems, gyroscopes, strain gauges, Miniature Inertial Measurement Units (MIMUs), Light Detection and Ranging (LIDAR) sensors, Sonic Detection and Ranging (SODAR) sensors, anemometers, or similar.

More specifically, as shown, the sensors may include blade sensors 58 for monitoring the rotor blades 22; generator sensors 57 for monitoring the torque, the rotational speed, the acceleration and/or the power output of the generator 30; wind sensors 59 for monitoring the wind speed; and/or shaft sensors 54 for measuring the loads acting on the rotor shaft 32 and/or the rotational speed of the rotor shaft 32. Additionally, the wind turbine 10 may include one or more tower sensors 56 for measuring the loads transmitted through the tower 12 and/or the acceleration of the tower 12. Of course, the wind turbine 10 may further include various other suitable sensors for measuring any other suitable loading and/or operating conditions of the wind turbine 10. For example, the wind turbine 10 may also include one or more sensors 55 (e.g., accelerometers) for monitoring the acceleration of the gearbox 36 and/or the acceleration of one or more structural components of the machine head (e.g., the generator frame, the main frame or bedplate, etc.).

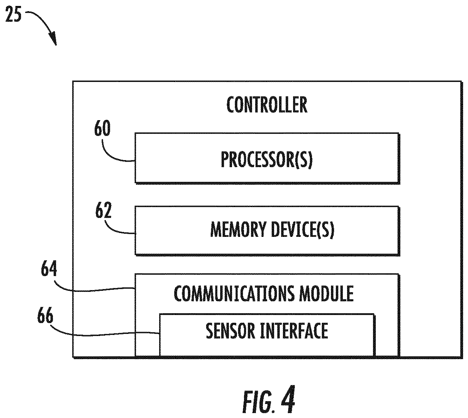

Referring now to FIG. 4, there is illustrated a block diagram of one embodiment of suitable components that may be included within the controller 25 in accordance with aspects of the present subject matter. As shown, the controller 25 may include one or more processor(s) 60 and associated memory device(s) 62 configured to perform a variety of computer-implemented functions (e.g., performing the methods, steps, calculations and the like and storing relevant data as disclosed herein). Additionally, the controller 25 may also include a communications module 64 to facilitate communications between the controller 25 and the various components of the wind turbine 10. Further, the communications module 64 may include a sensor interface 66 (e.g., one or more analog-to-digital converters) to permit signals transmitted from the sensors) to be converted into signals that can be understood and processed by the processors 60. It should be appreciated that the sensors as described herein may be communicatively coupled to the communications module 64 using any suitable means. For example, the sensors may be coupled to the sensor interface 66 via a wired connection. However, in alternative embodiments, the sensors may be coupled to the sensor interface 66 via a wireless connection, such as by using any suitable wireless communications protocol known in the art.

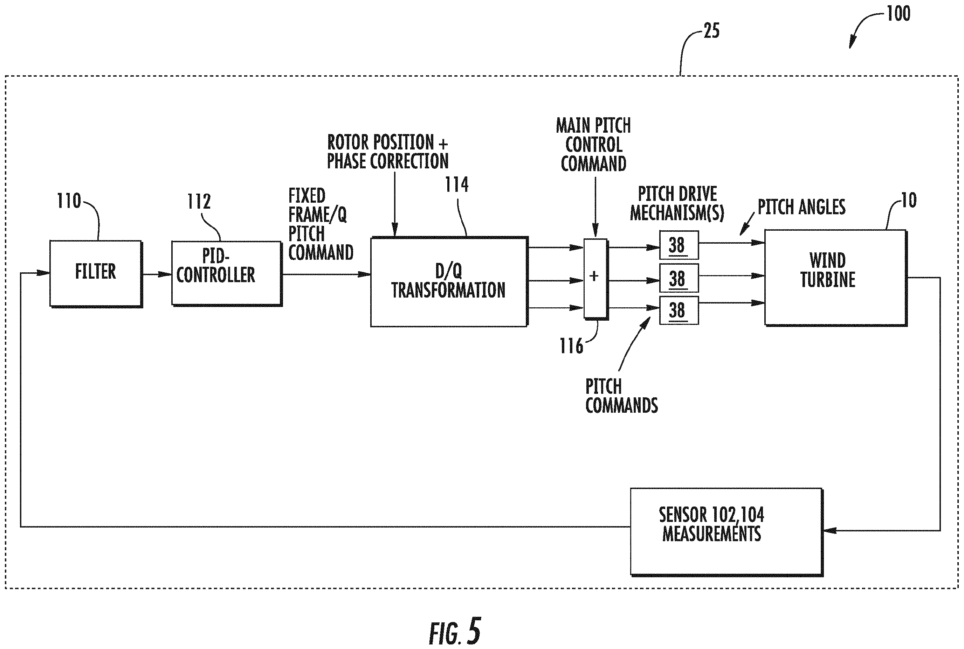

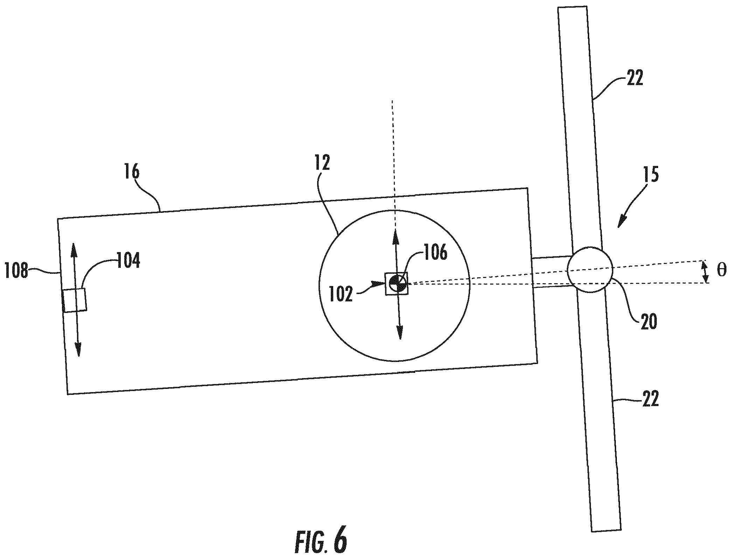

Referring now to FIGS. 5 and 6, a schematic diagram of one embodiment of a system 100 for reducing vibrations of a tower of a wind turbine (e.g. the tower 12 of wind turbine 10) that may be implemented by the controller 25 is illustrated. As shown in the illustrated embodiment, the system 100 may correspond to a closed-loop control scheme that provides continuous and/or active tower torsion damping for the wind turbine 10. More specifically, as shown in FIG. 5, the system 100 receives a plurality of sensor measurements (e.g. from sensors 102, 104 of FIG. 6) that represent a torsional movement of the tower 12. More specifically, as mentioned, the sensors 102, 104 may be communicatively coupled to the controller 25 (e.g. via sensor interface 66) such that the controller 25 can perform one or more operations using the sensor measurements. Thus, in one embodiment, the system 100 may be configured to continuously determine the torsional movement of the tower 12 by measuring a first movement (e.g. via sensor 102) at a first location of the wind turbine 10 and a second movement (e.g. via sensor 104) at a second location of the wind turbine, and subtracting the measured first movement from the measured second movement. More specifically, as shown in FIG. 6, the first location may correspond to a tower center 106 of the tower 12, whereas the second location may include a posterior or anterior side of the nacelle 16 depending on the wind turbine configuration. In certain embodiments, the posterior side of the nacelle 16 generally refers to the side of the nacelle 16 that is opposite to the rotor 15 of the wind turbine 10.

In an alternative embodiment, the system 100 may be configured to continuously determine the torsional movement of the tower 12 by measuring, via one or more sensors 102, 104, an angular acceleration of the tower 12. For example, as shown in FIG. 6, sensor 102 may be configured to determine a torsional movement (i.e. an angular rotation θ) of the top of the nacelle 16 with respect to the tower center 106. In yet another embodiment, the system 100 may be configured to continuously determine the torsional movement of the tower 12 via one or more of the yaw drive mechanisms 50.

In additional embodiments, as shown in FIG. 5, the system 100 may also include one or more filters 110 configured to filter the sensor measurements obtained from the sensors (e.g. 56, 102, 104). It should be understood that the filter(s) may be any suitable filter known in the art. More specifically, in certain embodiments, the filter(s) may include a notch filter, a low-pass filter, a high-pass filter, or combinations thereof.

Still referring to FIG. 5, the filtered sensor measurements may then be sent through a secondary control device 112. In certain embodiments, the secondary control device 112 may be any of the following: a proportional (P) controller, a proportional integral (PI) controller, a proportional derivative (PD) controller, a proportional integral derivative (PID) controller, or similar. For example, as shown in the illustrated embodiment, the secondary control device 112 corresponds to a PID controller, which is generally understood to be a control loop feedback mechanism that determines or calculates an error value based on the difference between a measured process variable and a desired set point. As such, a PID controller attempts to minimize the error by adjusting the process through the use of a manipulated variable. Thus, in some embodiments, the PID controller 112 is configured to determine a fixed frame control action (e.g. a fixed frame/Q pitch command) based on the difference between the sensor measurements and an allowable torsional movement of the tower 12.

Based on the fixed frame control action command, the controller 25 is configured to continuously determine one or more pitch commands 116 for one or more of the pitch drive mechanisms 38 of the wind turbine 10. For example, as shown in embodiment of FIG. 5, the fixed frame control action, which represents a three-phase system, may be transformed into a direct-quadrature (d-q) rotating reference frame. Thus, the system 100 is configured to determine the main pitch control command 116 that can be subsequently sent to each of the pitch drive mechanisms 38 as individual pitch commands. Accordingly, the pitch device mechanisms 38 can alter the pitch angles of each of the rotor blades 22 (as needed) so as to dampen the torsional movement of the tower 12.

More specifically, in certain embodiments, the system 100 may be configured to continuously determine the control command (e.g. the main pitch control command 116) for the pitch drive mechanism(s) 38 by determining a yaw moment of the wind turbine 10 as a function of the torsional movement. Further, the system 10 may determine a damper command for the wind turbine 10 based on the yaw moment. Thus, the damper command sent to each of the pitch device mechanism(s) 38 is configured to alter the pitch angles of each of the rotor blades 22 as needed so as to dampen the torsional movement of the tower 12. In addition, in certain embodiments, the damper command may be added as an offset to existing pitch commands so as to counter or offset torsional movement of the tower 12. As used herein, the yaw moment of the tower generally refers to a loading of a rotor of the wind turbine caused by rotor asymmetry.

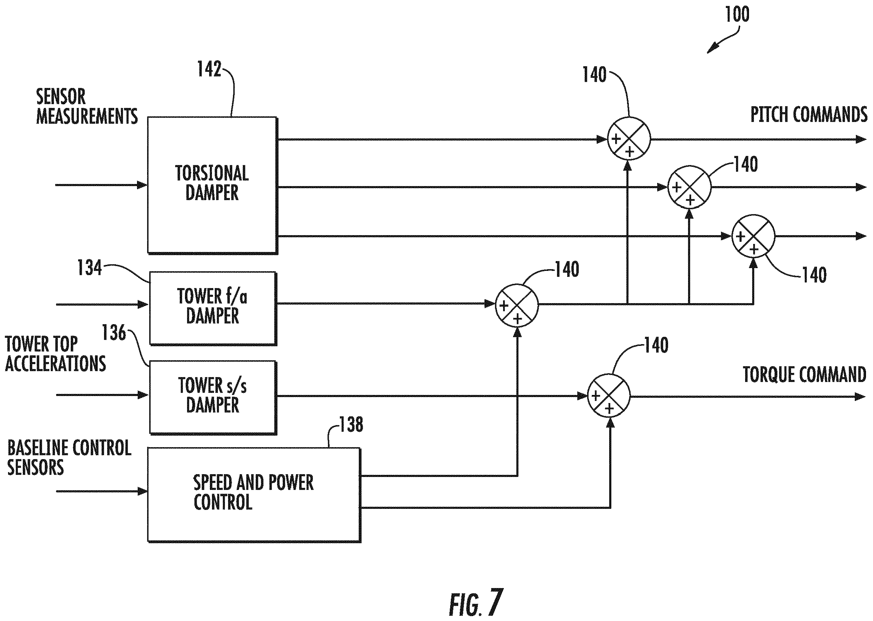

For example, as shown in FIG. 7, a schematic diagram of another embodiment of the system 100 for reducing vibrations of the wind turbine 10 according to the present disclosure is illustrated. As shown, the system 100 may include a torsional damper 142 that is configured to receive one or more sensor measurements, i.e. torsional movement signals. In addition, the system 100 may optionally include a tower fore/aft damper 134 and a tower side/side damper 136. Thus, the tower fore/aft damper 134 and the tower side/side damper 136 are configured to receive tower top accelerations, respectively. In addition, a speed and power control 138 is configured to receive one or more baseline control sensor measurements. The system 100 is then configured to process the data to determine one or more pitch commands and/or a torque command for the wind turbine 10 based, at least in part, on the torsional movement signals. More specifically, as shown, the system 100 may include one or more comparators 140 configured to process the data to determine the pitch command(s) and/or the torque command for the wind turbine 10. As such, in certain embodiments, the pitch commands can be added to the main pitch control commands, e.g. for speed control. As such, the pitch commands provide offset angles to existing pitch angle set points of the controller 25.

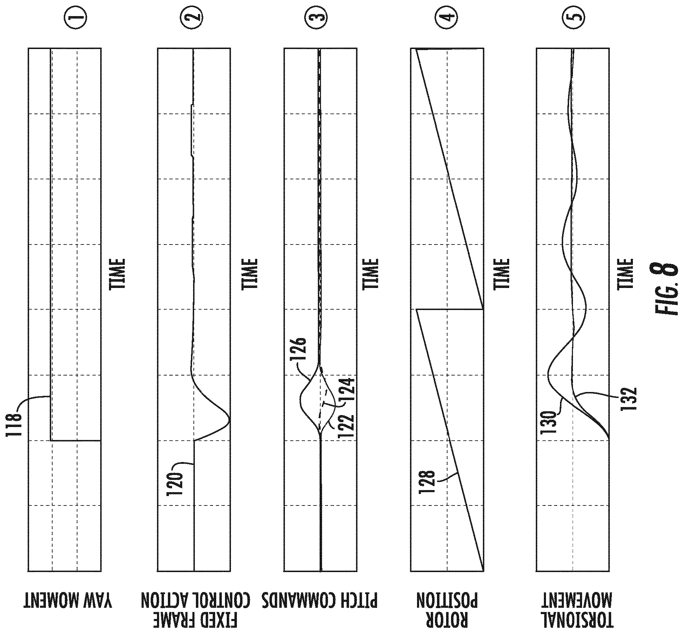

Referring now to FIG. 8, various graphs depicting the effects implementing the system 100 for active torsional damping of a wind turbine tower 12 according to the present disclosure are illustrated. More specifically, graph (1) illustrates the yaw moment 118 versus time; graph (2) illustrates the fixed frame control action 120 versus time; graph (3) illustrates the pitch commands for the three different rotor blades 22 of the wind turbine 10 (e.g. 122, 124, 126) versus time; graph (4) illustrates the rotor position 128 of the wind turbine 10 versus time; and graph (5) illustrates the torsional movement for a damped 132 wind turbine and un-damped 130 wind turbine versus time. As shown, the yaw moment 118 (graph (1)) results in three different pitch commands 122, 124, 126 (graph (3)) for each of the rotor blades 22 of the wind turbine so as to dampen the torsional movement of the tower 12 (graph (5)).

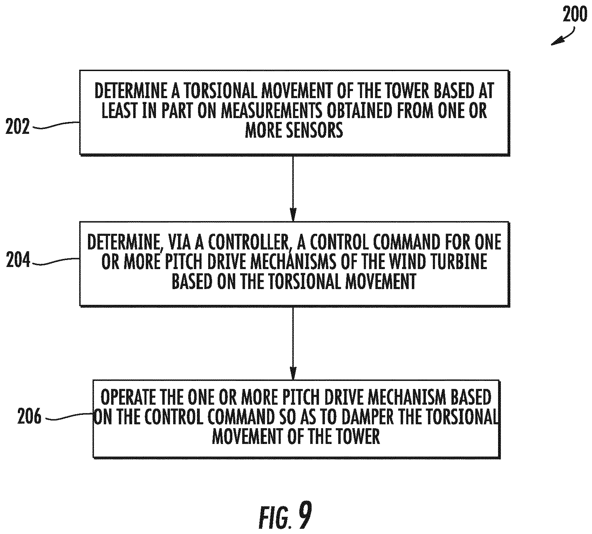

Referring now to FIG. 9, a flow diagram of one embodiment of a method 200 for reducing vibrations of a tower (e.g. a tubular steep tower or a lattice tower structure) of a wind turbine 10 is illustrated. As shown at 202, the method 200 includes determining a torsional movement of the tower based at least in part on measurements obtained from one or more sensors. As shown at 204, the method 200 determining, via a controller, a control command for one or more pitch drive mechanisms of the wind turbine based on the torsional movement. Thus, at 206, the method 200 also includes operating the one or more pitch drive mechanisms based on the control command so as to dampen the torsional movement of the tower.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art.

## Claims

1. A method (200) for reducing vibrations of a tower (12) of a wind turbine (10), the method comprising:
continuously determining (202) a torsional movement of the tower (12) based at least in part on measurements obtained from one or more sensors (102,104) by
measuring, via the one or more linear acceleration sensors (102, 104), a first movement at a first location of the wind turbine (10),
measuring, via the one or more linear acceleration sensors(102, 104), a second movement at a second location of the wind turbine (10), and
subtracting the measured first movement from the measured second movement, wherein the first location comprises a tower center and the second location comprises at least one of a posterior side of the nacelle (16) or an anterior side of the nacelle (16);
continuously determining (204), via a controller (25), a main pitch control command (116) a plurality of pitch drive mechanisms (38) of the wind turbine (10) based on the torsional movement by:
a) determining a fixed frame/Q pitch command using a secondary control device (112);
b) transforming (114) the fixed frame/Q pitch command into a direct-quadrature (d-q) rotating reference frame based upon a rotor position and phase correction to provide the main pitch control command (116); and
operating (206) the pitch drive mechanisms (38) based on the main pitch control command (116) so as to dampen the torsional movement of the tower (12).

2. The method (200) of any preceding claim, wherein continuously determining the torsional movement of the tower (12) further comprises measuring, via the one or more sensors (102,104), an angular movement of the tower (12).

3. The method (200) of any preceding claim, further comprising filtering the measurements obtained from the one or more sensors (102,104).

4. The method (200) of any preceding claim, wherein continuously determining the main pitch control command (116) for the pitch drive mechanisms (38) of the wind turbine (10) based on the torsional movement further comprises:
determining a yaw moment of the wind turbine (10) as a function of the torsional movement, and
determining a damper command for the wind turbine (10) based on the yaw moment so as to counter the torsional movement.

5. The method (200) of claim 4, wherein operating the pitch drive mechanisms (38) based on the main pitch control command (116) so as to dampen the torsional movement of the tower (12) further comprises:
operating the pitch drive mechanisms (38) based on the damper command.

6. The method (200) of any preceding claim, wherein the yaw moment of the tower (12) corresponds to a loading of a rotor of the wind turbine (10) caused by rotor asymmetry.

7. The method (200) of any preceding claim, further comprising continuously determining the torsional movement of the tower (12) via one or more yaw drive mechanisms (50).

8. A system (100) for reducing vibrations of a tower (12) of a wind turbine (10), the system (100) comprising:
one or more linear acceleration sensors (102,104) configured to measure a torsional movement of the tower (12) by measuring a first movement at a first location of the wind turbine (10) and by measuring a second movement at a second location of the wind turbine (10), wherein the first location comprises a tower center and the second location comprises at least one of a posterior side of the nacelle (16) or an anterior side of the nacelle (16);
a controller (25) communicatively coupled with the one or more sensors (102,104), the controller (25) configured to perform one or more operations, the operations comprising:
continuously determining (202) a torsional movement of the tower (12) based at least in part on measurements obtained from the one or more sensors (102,104) and by subtracting the measured first movement from the measured second movement,
continuously determining, via a controller (25), a main pitch control command (116) for a plurality of pitch drive mechanisms (38) of the wind turbine (10) based on the torsional movement by:
a) determining a fixed frame/Q pitch command using a secondary control device (112);
b) transforming (114) the fixed frame/Q pitch command into a direct-quadrature (d-q) rotating reference frame based upon a rotor position and phase correction to provide the main pitch control command (116); and
operating the pitch drive mechanisms (38) based on the main pitch control command (116) so as to dampen the torsional movement of the tower (12).

9. The system (100) of claims 8, comprising one or more sensors (102,104) configured to measure an angular movement of the tower (12).

10. The system (100) of claim 8 or 9, further comprising one or more filters (110) configured to filter the measurements obtained from the one or more sensors (102,104), wherein the one or more filters (110) comprise at least one of a notch filter, a low-pass filter, a high-pass filter, or combinations thereof.

11. The system (100) of any of claims 8 to 10, wherein continuously determining the main pitch control command (116) the pitch drive mechanisms (38) of the wind turbine (10) based on the torsional movement further comprises:
determining a yaw moment of the wind turbine (10) as a function of the torsional movement, wherein the yaw moment of the tower (12) corresponds to an asymmetric loading of a rotor of the wind turbine (10), and
determining a damper command for the wind turbine (10) based on the yaw moment.

12. The system (100) of any of claims 8 to 11, wherein the controller (25) further comprises at least one or more of the following control devices: a proportional (P) controller (25), a proportional integral (PI) controller (25), a proportional derivative (PD) controller (25), or a proportional integral derivative (PID) controller (25).

13. The system (100) of any of claims 8 to 12, wherein the one or more sensors (102,104) comprise one or more of the following: angular accelerometers, linear accelerometers, vibration sensors, angle of attack sensors, camera systems, fiber optic systems, gyroscopes, strain gauges, Miniature Inertial Measurement Units (MIMUs), Light Detection and Ranging (LIDAR) sensors, or Sonic Detection and Ranging (SODAR) sensors.

14. The system (100) of any of claims 8 to 13, wherein the tower (12) comprises a lattice tower structure.

## Patentansprüche

1. Ein Verfahren (200) zum Reduzieren von Vibrationen eines Turms (12) einer Windturbine (10), wobei das Verfahren aufweist:
kontinuierliches Bestimmen (202) einer Torsionsbewegung des Turms (12) zumindest teilweise auf der Grundlage von Messungen, die von einem oder
mehreren Sensoren (102, 104) empfangen werden, durch
Messen, mittels eines oder mehrerer linearer Beschleunigungssensoren (102, 104), einer ersten Bewegung an einer ersten Stelle der Windturbine (10),
Messen, mittels eines oder mehrerer Linearbeschleunigungssensoren (102, 104), einer zweiten Bewegung an einem zweiten Ort der Windturbine (10), und
Subtrahieren der gemessenen ersten Bewegung von der gemessenen zweiten Bewegung, wobei der erste Ort eine Turmmitte aufweist und der zweite Ort wenigstens eine hintere Seite der Gondel (16) oder eine vordere Seite der Gondel (16) aufweist;
kontinuierliches Bestimmen (204), mittels einer Steuerung (25), eines Haupt-Pitch-Steuerungsbefehls (116) einer Vielzahl von Pitch-Antriebsmechanismen (38) der Windturbine (10) basierend auf der Torsionsbewegung durch:
a) Bestimmen eines feststehenden Frame/Q-Pitch-Befehls unter Verwendung einer sekundären Steuereinrichtung (112);
b) Transformieren (114) des feststehenden Frame/Q-Pitch-Befehls in einen Direkt-Quadratur-(d-q) rotierenden Referenzrahmen basierend auf einer Rotorposition und einer Phasenkorrektur, um den Haupt-Pitch-Steuerbefehl (116) bereitzustellen; und
Betätigen (206) der Pitch-Antriebsmechanismen (38) basierend auf dem Haupt-Pitch-Steuerbefehl (116), um die Torsionsbewegung des Turms (12) zu dämpfen.

2. Das Verfahren (200) nach einem der vorhergehenden Ansprüche, wobei das kontinuierliche Bestimmen der Torsionsbewegung des Turms (12) weiterhin ein Messen einer Torsionsbewegung des Turms (12) mittels des einen oder der mehreren Sensoren (102, 104) aufweist.

3. Das Verfahren (200) nach einem der vorhergehenden Ansprüche, wobei das Verfahren weiterhin ein Filtern von Messungen, die von einen oder den mehreren Sensoren (102, 104) empfangen wurden.

4. Das Verfahren (200) nach einem der vorhergehenden Ansprüche, wobei das kontinuierliche Bestimmen des Haupt-Pitch-Steuerbefehls (116) für die Pitch-Antriebsmechanismen (38) der Windturbine (10) basierend auf der Torsionsbewegung weiterhin aufweist:
Bestimmen eines Yaw-Moments der Windturbine (10) als eine Funktion der Torsionsbewegung, und
Bestimmen eines Dämpfersteuerungsbefehls für die Windturbine (10) auf der Grundlage des Yaw-Moments, um der Torsionsbewegung entgegenzuwirken.

5. Das Verfahren (200) nach Anspruch 4, wobei das Betätigen der Pitch-Antriebsmechanismen (38) basierend auf dem Haupt-Pitch-Steuerbefehl (116), um die Torsionsbewegung des Turms (12) zu dämpfen, weiterhin aufweist:
Betätigen der Pitch-Antriebsmechanismen (38) basierend auf dem Dämpfersteuerungsb efehl.

6. Das Verfahren (200) nach einem der vorhergehenden Ansprüche, wobei das Yaw-Moment des Turms (12) einer Belastung eines Rotors der Windturbine (10) entspricht, die durch Rotorasymmetrie verursacht wird.

7. Das Verfahren (200) nach einem der vorhergehenden Ansprüche, weiterhin aufweisend ein kontinuierliches Bestimmen der Torsionsbewegung des Turms (12) über einen oder mehrere Yaw-Antriebsmechanismen (50).

8. Ein System (100) zum Reduzieren von Vibrationen eines Turms (12) einer Windturbine (10), wobei das System (100) aufweist:
einen oder mehrere lineare Beschleunigungssensoren (102, 104), die derart konfiguriert sind, dass sie eine Torsionsbewegung des Turms (12) messen, indem sie eine erste Bewegung an einer ersten Stelle der Windturbine (10) messen und eine zweite Bewegung an einer zweiten Stelle der Windturbine (10) messen, wobei die erste Stelle eine Turmmitte aufweist und die zweite Stelle zumindest eine hintere Seite der Gondel (16) oder eine vordere Seite der Gondel (16) aufweist;
eine Steuerung (25), die kommunikativ mit dem einen oder den mehreren Sensoren (102, 104) verbunden ist, wobei die Steuerung (25) derart konfiguriert ist, dass sie einen oder mehrere Operationen durchführt, wobei die Operationen Folgendes aufweisen:
kontinuierliches Bestimmen (202) einer Torsionsbewegung des Turms (12), basierend zumindest teilweise auf Messungen, die von dem einen oder den mehreren Sensoren (102, 104) empfangen werden, und durch Subtraktion der gemessenen ersten Bewegung von der gemessenen zweiten Bewegung,
kontinuierliches Bestimmen (204), mittels einer Steuerung (25), eines Haupt-Pitch-Steuerungsbefehls (116) einer Vielzahl von Pitch-Antriebsmechanismen (38) der Windturbine (10) basierend auf der Torsionsbewegung durch:
a) Bestimmen eines feststehenden Frame/Q-Pitch-Befehls unter Verwendung einer sekundären Steuereinrichtung (112);
b) Transformieren (114) des feststehenden Frame/Q-Pitch-Befehls in einen Direkt-Quadratur-(d-q) rotierenden Referenzrahmen basierend auf einer Rotorposition und einer Phasenkorrektur, um den Haupt-Pitch-Steuerbefehl (116) bereitzustellen; und
Betätigen der Pitch-Antriebsmechanismen (38) basierend auf dem Haupt-Pitch-Steuerbefehl (116), um die Torsionsbewegung des Turms (12) zu dämpfen.

9. Das System (100) nach Anspruch 8, das einen oder mehrere Sensoren (102, 104) aufweist, die derart konfiguriert sind, um eine Torsionsbewegung des Turms (12) zu messen.

10. Das System (100) nach Anspruch 8 oder 9, das weiterhin einen oder mehrere Filter (110) aufweist, die derart konfiguriert sind, dass sie die von dem einen oder den mehreren Sensoren (102, 104) empfangenen Messungen filtern, wobei der eine oder die mehreren Filter (110) mindestens einen Kerbfilter, einen Tiefpassfilter, einen Hochpassfilter oder Kombinationen davon aufweisen.

11. Das System (100) nach einem der Ansprüche 8 bis 10, wobei das kontinuierliche Bestimmen des Haupt-Pitch-Steuerbefehls (116) der Pitch-Antriebsmechanismen (38) der Windturbine (10) basierend auf der Torsionsbewegung weiterhin aufweist::
Bestimmen eines Yaw-Moments der Windturbine (10) als eine Funktion der Torsionsbewegung, wobei das Yaw-Moment des Turms (12) einer asymmetrischen Belastung eines Rotors der Windturbine (10) entspricht, und
Bestimmen eines Dämpfersteuerungsbefehls für die Windturbine (10) basierend auf dem Yaw-Moment.

12. Das System (100) nach einem der Ansprüche 8 bis 11, wobei die Steuerung Krücken (25) weiterhin mindestens eine oder mehrere der folgenden Regelvorrichtungen aufweist: einen Proportional-(P)-Regler (25), einen Proportional-Integral-(PI)-Regler (25), einen Proportional-Differenzial-(PD)-Regler (25) oder einen Proportional-Integral-Differenzial-(PID)-Regler (25).

13. Das System (100) nach einem der Ansprüche 8 bis 12, wobei der eine oder die mehreren Sensoren (102, 104) einen oder mehrere der folgenden Sensoren aufweisen: Winkelbeschleunigungssensoren, Linearbeschleunigungssensoren, Schwingungssensoren, Anstellwinkelsensoren, Kamerasysteme, faseroptische Systeme, Gyroskope, Dehnungsmessstreifen, Miniatur-Trägheitsmesseinheiten (MIMUs), LIDAR-Sensoren (Light Detection and Ranging) oder SODAR-Sensoren (Sonic Detection and Ranging).

14. Das System (100) nach einem der Ansprüche 8 bis 13, wobei der Turm (12) eine Gitterturmstruktur aufweist.

## Revendications

1. Procédé (200) pour réduire des vibrations d'une tour (12) d'une turbine éolienne (10), le procédé comprenant :
la détermination continue (202) d'un mouvement de torsion de la tour (12) sur la base au moins en partie de mesures obtenues à partir d'un ou plusieurs capteurs (102, 104) par
la mesure, par l'intermédiaire du ou des capteurs d'accélération linéaire (102, 104), d'un premier mouvement au niveau d'un premier emplacement de la turbine éolienne (10),
la mesure, par l'intermédiaire du ou des capteurs d'accélération linéaire (102, 104), d'un deuxième mouvement au niveau d'un deuxième emplacement de la turbine éolienne (10), et
la soustraction du premier mouvement mesuré du deuxième mouvement mesuré, dans lequel le premier emplacement comprend un centre de tour et le deuxième emplacement comprend au moins l'un parmi un côté postérieur de la nacelle (16) ou un côté antérieur de la nacelle (16) ;
la détermination continue (204), par l'intermédiaire d'un contrôleur (25), d'une instruction de commande de pas principal (116) d'une pluralité de mécanismes d'actionnement de pas (38) de la turbine éolienne (10) sur la base du mouvement de torsion par :
a) la détermination d'une instruction de cadre fixe/pas Q en utilisant un dispositif de commande secondaire (112) ;
b) la transformation (114) de l'instruction de cadre fixe/pas Q en un cadre de référence rotatif en quadrature directe (d-q) sur la base d'une position de rotor et d'une correction de phase pour fournir l'instruction de commande de pas principal (116) ; et
le fonctionnement (206) des mécanismes d'actionnement de pas (38) sur la base de l'instruction de commande de pas principal (116) de façon à amortir le mouvement de torsion de la tour (12).

2. Procédé (200) selon une quelconque revendication précédente, dans lequel la détermination continue du mouvement de torsion de la tour (12) comprend en outre la mesure, par l'intermédiaire du ou des capteurs (102, 104), d'un mouvement angulaire de la tour (12).

3. Procédé (200) selon une quelconque revendication précédente, comprenant en outre le filtrage des mesures obtenues à partir du ou des capteurs (102, 104).

4. Procédé (200) selon une quelconque revendication précédente, dans lequel la détermination continue de l'instruction de commande de pas principal (116) pour les mécanismes d'actionnement de pas (38) de la turbine éolienne (10) sur la base du mouvement de torsion comprend en outre :
la détermination d'un moment de lacet de la turbine éolienne (10) en fonction du mouvement de torsion, et
la détermination d'une instruction d'amortissement pour la turbine éolienne (10) sur la base du moment de lacet de façon à contrer le mouvement de torsion.

5. Procédé (200) selon la revendication 4, dans lequel le fonctionnement des mécanismes d'actionnement de pas (38) sur la base de l'instruction de commande de pas principal (116) de façon à amortir le mouvement de torsion de la tour (12) comprend en outre :
le fonctionnement des mécanismes d'actionnement de pas (38) sur la base de l'instruction d'amortissement.

6. Procédé (200) selon une quelconque revendication précédente, dans lequel le moment de lacet de la tour (12) correspond à un chargement d'un rotor de la turbine éolienne (10) causé par une asymétrie de rotor.

7. Procédé (200) selon une quelconque revendication précédente, comprenant en outre la détermination continue du mouvement de torsion de la tour (12) par l'intermédiaire d'un ou plusieurs mécanismes d'actionnement de lacet (50).

8. Système (100) pour réduire des vibrations d'une tour (12) d'une turbine éolienne (10), le système (100) comprenant :
un ou plusieurs capteurs d'accélération linéaire (102, 104) configurés pour mesurer un mouvement de torsion de la tour (12) en mesurant un premier mouvement au niveau d'un premier emplacement de la turbine éolienne (10) et en mesurant un deuxième mouvement au niveau d'un deuxième emplacement de la turbine éolienne (10), dans lequel le premier emplacement comprend un centre de tour et le deuxième emplacement comprend au moins l'un parmi un côté postérieur de la nacelle (16) ou un côté antérieur de la nacelle (16) ;
un contrôleur (25) couplé par communications au ou aux capteurs (102, 104), le contrôleur (25) configuré pour mettre en œuvre une ou plusieurs opérations, les opérations comprenant :
la détermination continue (202) d'un mouvement de torsion de la tour (12) sur la base au moins en partie de mesures obtenues à partir du ou des capteurs (102, 104) et en soustrayant le premier mouvement mesuré du deuxième mouvement mesuré,
la détermination continue, par l'intermédiaire d'un contrôleur (25), d'une instruction de commande de pas principal (116) pour une pluralité de mécanismes d'actionnement de pas (38) de la turbine éolienne (10) sur la base du mouvement de torsion par :
a) la détermination d'une instruction de cadre fixe/pas Q en utilisant un dispositif de commande secondaire (112) ;
b) la transformation (114) de l'instruction de cadre fixe/pas Q en un cadre de référence rotatif en quadrature directe (d-q) sur la base d'une position de rotor et d'une correction de phase pour fournir l'instruction de commande de pas principal (116) ; et
le fonctionnement des mécanismes d'actionnement de pas (38) sur la base de l'instruction de commande de pas principal (116) de façon à amortir le mouvement de torsion de la tour (12).

9. Système (100) selon les revendications 8, comprenant un ou plusieurs capteurs (102, 104) configurés pour mesurer un mouvement angulaire de la tour (12).

10. Système (100) selon la revendication 8 ou 9, comprenant en outre un ou plusieurs filtres (110) configurés pour filtrer les mesures obtenues à partir du ou des capteurs (102, 104), dans lequel le ou les filtres (110) comprennent au moins l'un parmi un filtre d'absorption, un filtre passe-bas, un filtre passe-haut, ou des combinaisons de ceux-ci.

11. Système (100) selon l'une quelconque des revendications 8 à 10, dans lequel la détermination continue de l'instruction de commande de pas principal (116) pour les mécanismes d'actionnement de pas (38) de la turbine éolienne (10) sur la base du mouvement de torsion comprend en outre :
la détermination d'un moment de lacet de la turbine éolienne (10) en fonction du mouvement de torsion, dans lequel le moment de lacet de la tour (12) correspond à un chargement asymétrique d'un rotor de la turbine éolienne (10), et
la détermination d'une instruction d'amortissement pour la turbine éolienne (10) sur la base du moment de lacet.

12. Système (100) selon l'une quelconque des revendications 8 à 11, dans lequel le contrôleur (25) comprend en outre au moins un ou plusieurs des dispositifs de commande suivants : un contrôleur proportionnel (P) (25), un contrôleur intégral proportionnel (PI) (25), un contrôleur dérivé proportionnel (PD) (25), ou un contrôleur dérivé intégral proportionnel (PID) (25).

13. Système (100) selon l'une quelconque des revendications 8 à 12, dans lequel le ou les capteurs (102, 104) comprennent un ou plusieurs des suivants : accéléromètres angulaires, accéléromètres linéaires, capteurs de vibration, capteurs d'angle d'attaque, systèmes de caméra, systèmes à fibre optique, gyroscopes, jauges de contrainte, unités de mesure inertielles miniatures (MIMU), capteurs de détection et télémétrie par ondes lumineuses (LIDAR), ou capteurs de détection et télémétrie soniques (SODAR).

14. Système (100) selon l'une quelconque des revendications 8 à 13, dans lequel la tour (12) comprend une structure de tour en treillis.
